Europäisches Patentamt

European Patent Office

Office européen des brevets

(19)

(11) EP 0 609 875 B1

(12) EUROPÄISCHE PATENTSCHRIFT

(45) Veröffentlichungstag und Bekanntmachung des Hinweises auf die Patenterteilung:
24.04.1996 Patentblatt 1996/17

(51) Int Cl.⁶: H02M 3/335

(21) Anmeldenummer: 94101618.0

(22) Anmeldetag: 02.02.1994

(54) **Verfahren zum Begrenzen der Frequenz eines spannungsgesteuerten Oszillators in einer Steuerschaltung eines Resonanzwandler-Schaltnetzteils und Steuerschaltung für ein Resonanzwandler-Schaltnetzteil**

Method of limiting the frequency of a voltage oscillator in a control circuit of a resonant converter power supply and a control circuit for a resonant converter power supply

Méthode pour limiter la fréquence d'un oscillateur commandé en tension dans un circuit de contrôle dans une alimentation de puissance avec un convertisseur résonant et circuit de contrôle pour une alimentation de puissance avec un convertisseur résonant

(84) Benannte Vertragsstaaten:
DE FR GB IT

(30) Priorität: 05.02.1993 DE 4303436

(43) Veröffentlichungstag der Anmeldung:
10.08.1994 Patentblatt 1994/32

(73) Patentinhaber: SIEMENS AKTIENGESELLSCHAFT
D-80333 München (DE)

(72) Erfinder: Erckert, Ricardo Dipl.-Ing
D-85617 Assling (DE)

(56) Entgegenhaltungen:
EP-A- 0 330 987          EP-A- 0 432 602
DE-A- 3 810 225

**Beschreibung**

Verfahren zum Begrenzen der Frequenz eines spannungsgesteuerten Oszillators in einer Steuerschaltung eines Resonanzwandler-Schaltnetzteils und Steuerschaltung für ein Resonanzwandler-Schaltnetzteil

Bei einem Resonanzwandler-Schaltnetzteil wird einem Schwingkreis, der üblicherweise ein Serienschwingkreis ist, über einen ersten Schalter eine Gleichspannung zugeführt, durch die der Schwingkreis angeregt wird. Nach einer halben Schwingungsperiode wird der erste Schalter geöffnet und der Schwingkreis über einen zweiten Schalter mit Masse verbunden, wodurch sich der Kondensator des Schwingkreises wieder entlädt und die Schwingung somit fortgesetzt wird. Es läßt sich also durch abwechselndes Öffnen und Schließen der beiden Schalter eine Schwingung anregen.

Die Spule des Schwingkreises ist durch die Primärwicklung eines Transformators gegeben, wobei das Windungsverhältnis dieses Transformators so gewählt ist, daß auf der Primärseite näherungsweise nur die Streuinduktivität in Erscheinung tritt. Die Resonanzfrequenz des Schwingkreises bestimmt sich folglich aus der Streuinduktivität des Transformators und der Kapazität des Kondensators.

Mittels der Sekundärwicklung des Transformators wird die Energie über eine Gleichrichterschaltung zu einer Last übertragen. Die Energieübertragung erfolgt also durch periodisches Anregen des Schwingkreises, wobei um so mehr Leistung übertragen werden kann, je häufiger der Kreis angeregt wird.

Die Häufigkeit der Anregung, also die Frequenz, mit der der erste Schalter geschlossen wird, wird durch einen spannungsgesteuerten Oszillator bestimmt, der seinerseits durch einen Regelverstärker angesteuert wird, wobei dieser Regelverstärker die Ausgangsspannung des Schaltnetzteils mit einer Referenzspannung vergleicht. Das Öffnen des ersten Schalters und Schließen des zweiten Schalters wird durch einen Null-Durchgangsdetektor bewirkt, der den Übergang von positiven zu negativen Werten des Stroms durch den Schwingkreis detektiert.

Bei dem beschriebenen Schaltnetzteil kann die Ausgangsspannung durch Verändern der Frequenz des spannungsgesteuerten Oszillators geregelt werden. Bei Erhöhung der Frequenz kann jedoch der Fall eintreten, daß eine Anregung des Schwingkreises bereits erfolgt, bevor der vorherige Durchschwingzyklus des Schwingkreises beendet ist, wodurch dem Schwingkreis Energie entzogen wird, statt daß ihm welche zugeführt wird. Dieser Fall tritt ein, wenn die Frequenz des spannungsgesteuerten Oszillators größer wird als die Resonanzfrequenz des Schwingkreises. Für die Regelung des Resonanzwandler-Schaltnetzteils bedeutet dies einen Umkehrpunkt. Um diesen Umkehrpunkt nicht zu erreichen, muß der spannungsgesteuerte Oszillator, mit dem die Schwingkreisanregung gesteuert wird, in seiner oberen Grenzfrequenz begrenzt sein.

Bisher wurde zu diesem Zweck die Ausgangsspannung des Regelverstärkers begrenzt. Diese Methode hat zwar den Vorteil, daß sie mit einer einfachen Schaltung realisiert werden kann, jedoch müssen der Resonanzkreis, der Oszillator und die Begrenzerschaltung sehr genau aufeinander abgestimmt sein. Außerdem können Fertigungsstreuungen, z.B. der Streuinduktivität des Transformators und anderer Bauelemente zu Fehlfunktionen bei hoher Last führen. Bei Teillast tritt bei der bekannten Schaltung an Stelle der Streuinduktivität eine höhere Induktivät in Erscheinung. Ein schneller Übergang von Vollast zu Teillast kann auch bei korrekter Dimensionierung zu Fehlfunktionen führen. Die Begrenzung der Regelverstärker-Ausgangsspannung wird meist mit Dioden durchgeführt. Dioden-Schwellspannungen sind jedoch temperaturabhängig, so daß die Begrenzung nur in einem begrenzten Temperaturbereich sauber arbeitet.

Die Aufgabe vorliegender Erfindung besteht also darin, ein Verfahren zum Begrenzen der Frequenz eines spannungsgesteuerten Oszillators in einer Steuerschaltung eines Resonanzwandler-Schaltnetzteils und eine Steuerschaltung für ein Resonanzwandler-Schaltnetzteil anzugeben, das die obengenannten Nachteile vermeidet.

Die Aufgabe wird gelöst durch ein Verfahren gemäß Anspruch 1 und durch eine Steuerschaltung gemäß Anspruch 3. Vorteilhafte Weiterbildungen der Erfindung sind in den Unteransprüchen angegeben.

Die Erfindung hat den Vorteil, daß das Verhalten des Resonanzwandler-Schaltnetzteils unabhängig von der Dimensionierung des Schwingkreises ist. Weiterhin führen bei der erfindungsgemäßen Lösung Fertigungsstreuungen des Transformators nicht mehr zu Fehlfunktionen. Außerdem kann beim Übergang von Vollast zu Teillast kein Umkehrpunkt der Regelung mehr erreicht werden. Weitere Vorteile sind die weitestgehende Temperaturunabhängigkeit der Steuerschaltung und die problemlose Dimensionierung des spannungsgesteuerten Oszillators.

Die Erfindung soll nachfolgend anhand eines Ausführungsbeispiels mit Hilfe von Figuren näher erläutert werden. Dabei zeigen

Figur 1     eine mögliche Ausführungsform der Erfindung und

Figur 2     die zeitliche Abhängigkeit einiger Signale der Schaltung gemäß Figur 1.

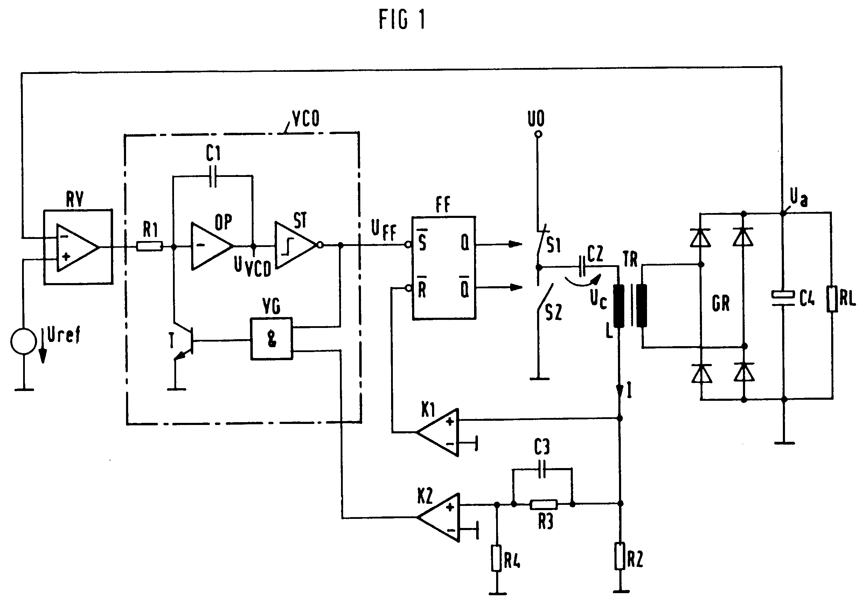

Beim Resonanzwandler-Schaltnetzteil gemäß Figur 1 wird dem aus einem Kondensator C2 und der Primärwicklung L eines Transformators TR bestehenden Serienschwingkreis über einen ersten Schalter S1 eine Gleichspannung U0 zugeführt. Der durch den Serienschwingkreis fließende Strom I erzeugt in einem in Serie zum Schwingkreis angeordneten Widerstand R2 eine Spannung, die von einem ersten Komparator K1 detektiert wird. Der erste Komparator K1 steuert den invertie-

renden Rücksetz-Eingang $\overline{R}$ eines Flip-Flops FF an, dessen Ausgänge Q und $\overline{Q}$ den ersten Schalter S1 und einen zweiten Schalter S2, der in Serie zum ersten Schalter S1 angeordnet ist, ansteuert.

Die im Serienschwingkreis gespeicherte Energie wird mittels der Sekundärwicklung des Transformators TR über eine Vollbrückengleichrichterschaltung GR, der ein Glättungskondensator C4 nachgeschaltet ist, einer Last RL zugeführt. Die am Glättungskondensator C4 anstehende Ausgangsspannung Ua wird einem Regelverstärker RV zugeführt, von dem sie mit einer Referenzspannung Uref verglichen wird. Die Ausgangsspannung des Regelverstärkers RV wird einem spannungsgesteuerten Oszillator VCO zugeführt. Dieser ist mit einem Integrationsverstärker, der mit einem Operationsverstärker OP, einem Widerstand R1 und einem Kondensator C1 gebildet ist, und der ein Ausgangssignal $U_{VCO}$ und einem invertierenden Schmitt-Trigger ST gebildet. Im Rückkoppelzweig des spannungsgesteuerten Oszillators VCO sind ein Verzögerungsglied VG, das mit einem UND-Gatter gebildet ist und ein npn-Transistor T angeordnet, wobei der Kollektor des npn-Transistors T mit dem invertierenden Eingang des Operationsverstärkers OP verbunden ist. Der Ausgang des spannungsgesteuerten Oszillators VCO, der durch den Ausgang des Schmitt-Triggers ST gebildet ist und an den ein Signal $U_{FF}$ ansteht, ist mit dem invertierenden Setzeingang $\overline{S}$ des Flip-Flops FF verbunden.

Das Verzögerungsglied VG wird vom Ausgang eines zweiten Komparators K2 angesteuert, dessen nichtinvertierender Eingang die am Widerstand R2 vom Strom I erzeugte Spannung über ein Differenzierglied zugeführt wird, wobei das Differenzierglied mit einer seriell angeordneten Parallelschaltung aus einem Widerstand R3 und einem Kondensator C3 und einem parallel angeordneten Widerstand R4 gebildet ist.

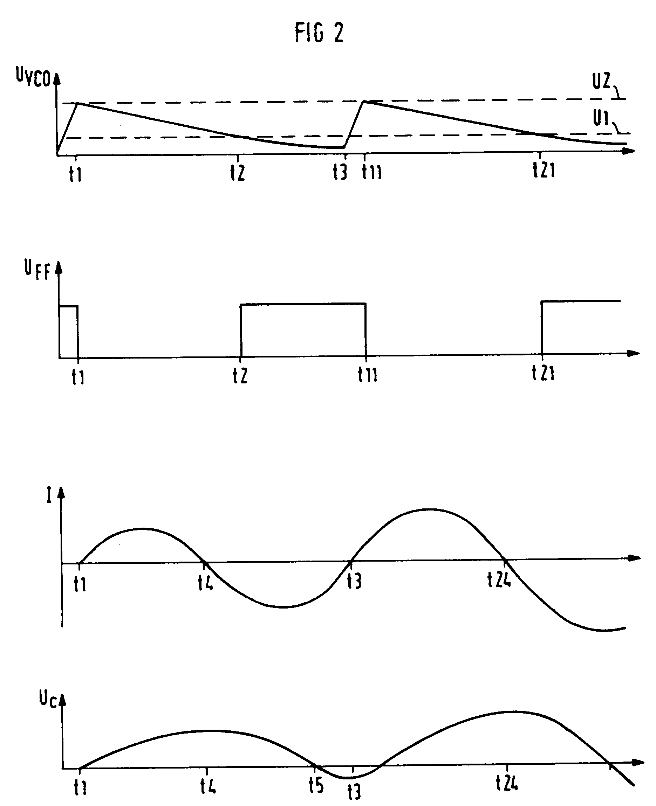

Die Funktion der Schaltung gemäß Figur 1 soll anhand der Signalverläufe gemäß Figur 2 erläutert werden.

Zum Zeitpunkt t1 weist das Ausgangssignal $U_{FF}$ des spannungsgesteuerten Oszillators VCO eine fallende Flanke auf, wodurch das von diesem Signal an seinem invertierenden Setz-Eingang $\overline{S}$ beaufschlagte Flip-Flop FF an seinem ersten Ausgang Q einen logischen High-Pegel und an seinem zweiten Ausgang $\overline{Q}$ einen logischen Low-Pegel aufweist. Dadurch wird der erste Schalter S1 geschlossen und der zweite Schalter S2 geöffnet, was dazu führt, daß durch den Schwingkreis ein Strom I fließt, und sich der Kondensator C2 auflädt, was durch den Verlauf des Stromes I und der Spannung $U_C$ in Figur 2 gezeigt ist. Zum Zeitpunkt t1 beginnt auch eine neue Integrationsperiode des Integrationsverstärkers, was zu einem linear abfallenden Ausgangssignal $U_{VCO}$ führt.

Der Strom I nimmt zunächst zu, um dann wieder abzunehmen. Der Übergang von positiven zu negativen Werten zum Zeitpunkt t4 wird mittels des ersten Komparators K1 detektiert, dessen Ausgang bei diesem Nulldurchgang den invertierenden Rücksetzeingang $\overline{R}$ des

Flip-Flops FF mit einer fallenden Flanke beaufschlagt, wodurch die Ausgänge Q, $\overline{Q}$ des Flip-Flops FF umschalten. Dadurch wird der erste Schalter S1 geöffnet und der zweite Schalter S2 geschlossen. Der Strom I fließt nun in die andere Richtung und der Kondensator C2 entlädt sich wieder. Zum Zeitpunkt t2 erreicht das Ausgangssignal $U_{VCO}$ des Integrationsverstärkers die untere Schwelle des Schmitt-Triggers ST. Das Ausgangssignal $U_{FF}$ des Schmitt-Triggers ST schaltet zu diesem Zeitpunkt dann auf einen logischen High-Pegel um, der jedoch durch das UND-Gatter VG noch nicht weitergeschaltet wird, da der Ausgang des zweiten Komparators K2 noch einen logischen Low-Pegel aufweist. Erst beim Übergang von negativen zu positiven Werten des Stromes I ändert sich der Ausgang des zweiten Komparators K2 zu einem logischen High-Pegel, wodurch der Ausgang des UND-Gatters ebenfalls einen logischen High-Pegel annimmt und der npn-Transistor T leitend geschaltet wird. Dadurch wird der Kondensator C1 des Integrationsverstärkers entladen, was zu einem Anstieg der Ausgangsspannung $U_{VCO}$ des Integrationsverstärkers führt. Wenn diese Ausgangsspannung $U_{VCO}$ den oberen Schwellwert U2 des Schmitt-Triggers ST erreicht, schaltet der Ausgang des Schmitt-Triggers ST wieder um, wodurch eine neue Schwingungsperiode beginnt. Das dem zweiten Komparator K2 vorgeschaltete Differenzierglied dient der Kompensation von Laufzeiten, beispielsweise des UND-Glieds.

Die Ausgangsspannung Ua des Resonanzwandler-Schaltnetzteils kann durch Wahl der Referenzspannung Uref eingestellt werden. Schwankungen dieser Ausgangsspannung Ua werden durch die beschriebene Steuerschaltung ausgeregelt.

**Patentansprüche**

1. Verfahren zum Begrenzen der Frequenz eines spannungsgesteuerten Oszillators (VCO) in einer Steuerschaltung eines Resonanzwandler-Schaltnetzteils, bei dem die Verzögerungszeit eines im Rückkoppelzweig des spannungsgesteuerten Oszillators (VCO) angeordneten Verzögerungsglieds (VG) durch ein Signal, das den Übergang von negativen zu positiven Werten des Stromes (I) durch den Schwingkreis (C2, L) des .Schaltnetzteils anzeigt, eingestellt wird.

2. Verfahren nach Anspruch 1, bei dem das Signal, das den Übergang von den negativen zu positiven Werten des Stromes (I) durch den Schwingkreis des Schaltnetzteils anzeigt, zur Kompensation von Laufzeiten differenziert wird.

3. Steuerschaltung für ein Resonanzwandler-Schaltnetzteil

   - mit einem Regelverstärker (RV), der mit der Ausgangsspannung (Ua) des Schaltnetzteils und mit einer Referenzspannung (Uref) beaufschlagt ist, und - mit einem spannungsgesteuerten Oszillator (VCO), der von dem Regelverstärker (RV) angesteuert wird, dadurch gekennzeichnet daß ein Flip-Flop (FF) vorgesehen ist, dessen Setz-Eingang ($\overline{S}$) von dem spannungsgesteuerten Oszillator (VCO) und dessen Rücksetz-Eingang ($\overline{R}$) von einem ersten Komparator (K1), der den Übergang von positiven zu negativen Werten des Stromes (I) im Schwingkreis (C2, L) des Schaltnetzteils detektiert, angesteuert wird, und

- ein Verzögerungsglied mit variabler Verzögerungszeit (VG) vorgesehen ist, das von einem Signal angesteuert wird, welches den Übergang von negativen zu positiven Werten des Stromes (I) im Schwingkreis (C2, L) des Schaltnetzteils anzeigt.

4. Steuerschaltung nach Anspruch 1, bei der das Verzögerungsglied mit variabler Verzögerungszeit (VG) mit einem UND-Gatter gebildet ist.

5. Steuerschaltung nach Anspruch 3 oder 4, bei der das das Verzögerungsglied (VG) ansteuernde Signal von einem zweiten Komparator (K2) erzeugt wird.

6. Steuerschaltung nach Anspruch 5, bei der dem zweiten Komparator (K2) ein Differenzierglied vorgeschaltet ist.

## Claims

1. Method for limiting the frequency of a voltage-controlled oscillator (VCO) in a control circuit of a resonant converter switched-mode power supply, in which the delay time of a delay element (VG) arranged in the feedback branch of the voltage-controlled oscillator (VCO) is set by a signal which indicates the transition from negative to positive values of the current (I) through the oscillating circuit (C2, L) of the switched-mode power supply.

2. Method according to Claim 1, in which the signal which indicates the transition from the negative to positive values of the current (I) through the oscillating circuit of the switched-mode power supply is differentiated for the compensation of propagation times.

3. Control circuit for a resonant converter switched-mode power supply

- having a control amplifier (RV) to which the output voltage (Ua) of the switched-mode power supply and a reference voltage (Uref) are applied, and

- having a voltage-controlled oscillator (VCO) which is driven by the control amplifier (RV), characterized in that a flip-flop (FF) is provided whose setting input ($\overline{S}$) is driven by the voltage-controlled oscillator (VCO) and whose reset input ($\overline{R}$) is driven by a first comparator (K1) which detects the transition from positive to negative values of the current (I) in the oscillating circuit (C2, L) of the switched-mode power supply, and

- a delay element (VG) having variable delay time is provided which is driven by a signal which indicates the transition from negative to positive values of the current (I) in the oscillating circuit (C2, L) of the switched-mode power supply.

4. Control circuit according to Claim 1, in which the delay element (VG) having variable delay time is formed with an AND gate.

5. Control circuit according to Claim 3 or 4, in which the signal driving the delay element (VG) is produced by a second comparator (K2).

6. Control circuit according to Claim 5, in which a differentiating element is connected upstream of the second comparator (K2).

## Revendications

1. Procédé pour limiter la fréquence d'un oscillateur commandé par la tension (VCO) dans un circuit de commande d'un bloc d'alimentation à découpage à convertisseur fonctionnant à la résonance, selon lequel le retard produit par un circuit à retard (VG) disposé dans la branche de réaction de l'oscillateur commandé par la tension (VCO) est réglé par un signal qui indique le passage de valeurs négatives à des valeurs positives du courant (I) par le circuit oscillant (C2,L) du bloc d'alimentation à découpage.

2. Procédé suivant la revendication 1, selon lequel le signal, qui indique le passage des valeurs négatives à des valeurs positives du courant (I) par le circuit oscillant du bloc d'alimentation à découpage, est différentié pour la compensation de temps de propagation.

3. Circuit de commande pour un bloc d'alimentation à découpage à convertisseur fonctionnant à la résonance, comportant :

- un amplificateur de régulation (RV), qui est chargé par la tension de sortie (Ua) du bloc d'alimentation à découpage et par une tension de référence (Uref), et

- un oscillateur commandé par la tension (VCO), qui est commandé par l'amplificateur de régulation (RV),

caractérisé par le fait

- qu'il est prévu une bascule bistable (FF), dont l'entrée de positionnement ($\bar{S}$) est commandée par l'oscillateur commandé par la tension (VCO) ou dont l'entrée de remise à l'état initial ($\bar{R}$) est commandée par un premier comparateur (K1), qui détecte le passage de valeurs positives à des valeurs négatives du courant (I) dans le circuit oscillant (C2, L) du bloc d'alimentation à découpage, et
- il est prévu un circuit à retard produisant un retard variable (VG) qui est commandé par un signal qui indique le passage de valeurs négatives à des valeurs positives du courant (I) dans le circuit oscillant (C2,L) du bloc d'alimentation à découpage.

4. Circuit de commande suivant la revendication 1, dans lequel le circuit à retard produisant un retard variable (VG) est formé par une porte ET.

5. Circuit de commande suivant la revendication 3 ou 4, dans lequel le signal commandant le circuit à retard (VG) est produit par un second comparateur (K2).

6. Circuit de commande suivant la revendication 5, dans lequel un circuit différentiateur est branché en amont du second comparateur (K2).

FIG 1

EP 0 609 875 B1

# FIG 2